# EUROPEAN PATENT SPECIFICATION

(11) **EP 0 785 684 B1**
(45) Date of publication and mention of the grant of the patent: **12.04.2000**
(21) Application number: 97102158.9
(22) Date of filing: 02.12.1991
(51) Int. Cl.: H04N 7/088

(54) **Method for receiving teletext transmission**
Verfahren zum Empfangen von Teletextübertragungen
Procédé de réception d'une transmission de télétexte

(30) Priority: 06.12.1990 IT 6796890
(43) Date of publication of application: 23.07.1997
(62) Divisional of application: 91120667.0
(73) Proprietor: EDICO S.r.l., I-00197 Roma (IT)
(72) Inventor: Dini, Roberto Ing., 10098 Rivoli (TO) (IT); Farina, Attilio Ing., 48016 Milano Marittima - Cervia (RA) (IT); Zappala, Giuseppe, Dr., Residenza Le Magnolie, 00052 Cerveteri (RM) (IT)
(74) Representative: Eisenführ, Speiser & Partner

(56) References cited:
- DE-A- 3 540 774
- DE-A- 3 622 308
- NTZ NACHRICHTENTECHNISCHE ZEITSCHRIFT, vol. 42, no. 11, 30 November 1989, BERLIN DE, pages 724-727, XP000072917 JG: "TOP macht Fernsehtext benutzerfreundlich"
- RUNDFUNKTECHNISCHE MITTEILUNGEN, vol. 31, no. 2, 30 April 1987, NORDERSTEDT DE, pages 83-93, XP002031354 EITZ G. ET AL: "TOP - EIN VERFAHREN ZUR VEREINFACHTEN ANWAHL VON FERNSEHTEXT-TAFELN DURCH DEN ZUSCHAUER"

## Description

The present invention relates to a method for receiving teletext transmissions represented by a plurality of pages, each of which can be selected by the user, from those available, by sending the receiver a command signal that generates a sequence of figures that locates an indicated page and lets control means start a search of the indicated page.

It is known that in many European countries, among which Italy, various systems (generically known with the English word "teletext", and more specifically called "televideo" in Italy and "Videotext" in West Germany)are used that consent the transmission, together with the normal television signals, of additional information inserted in the video signal (such as digital encoded signals) in some of the free horizontal lines during the period of vertical return.

These encoded signals, upon command of the user, are revealed by a specific decoder circuit, known and normally made with integrated monolithic circuits, inserted in the circuits of the television, in order to consent the visualization, on the television screen, of one of the transmitted information pages containing texts or graphics.

The pages transmitted are usually several hundred, grouped in subjects (for example: news: Pages. 110-125, sport: Pages. 150-162, politics: Pages. 210-222, games: Pages. 315-345, Etc); on the first page (page 100) there is usually the general index of the subjects, and on several of the following pages, the table of contents for each subject with the numbers of the relative pages.

Every time he wishes to receive a certain page, the user has to press three numerical keys in sequence in order to complete the number of three figures relative to the page he is looking for; the decoder begins to receive the pages transmitted, one after the other, by the sender; as soon as the one located by the sequence of figures introduced by the user is transmitted, the decoder acquires it.

However it could happen that the page located by the formulated sequence of figures is not actually transmitted; in such a case the decoder waits for an indefinite period of time for it to arrive; in practice the decoder is blocked until the user notices the problem and modifies the order.

This drawback usually happens with sets equipped with the so called 'next' key that automatically generates, when said button is pressed, the number of the three figures following the one of the page being visualized in that moment.

A set of this type is, for example, the one described in the Italian patent application N.67521/A86 corresponding to DE-A-3721 614.

The aim of the present invention is to realize an improved receiver for Teletext transmission systems that easily avoids the previously mentioned drawbacks.

It is known from DE-A-3622308 a method for receiving teletext transmissions of the above said type, wherein if the user inputs a page number, said number is compared with a stored list of received pages; if the input page number does not occur in said list, the next page in the list is acquired.

The implementation of such method, however, requires that previously all the numbers of the receivable pages have been stored. The situation therefore cannot be updated "in real time".

In order to realise the mentioned aims, the subject of the present invention is a method having the characterising features indicated in claim 1.

The characteristics and the advantages of the method for Teletext transmissions according to this invention are indicated in the following description, carried out referring to the enclosed drawings, that are provided as a non-limiting example, wherein:
Figure 1 represents the block diagram of the circuit operating according to the invention of a Teletext signal receiver
Figure 2 schematically represents the command unit of the receiver shown in Figure 1;
Figure 3 represents the logic flow of the operation of a first method for of the control unit of the receiver as shown in Figure 1;
Figure 4 represents the logic flow of the operation of a second example of the control unit of the receiver as shown in Figure 1;
Figure 5 represents the logic flow of the operation according to the invention of the control unit of the receiver as shown in Figure 1.

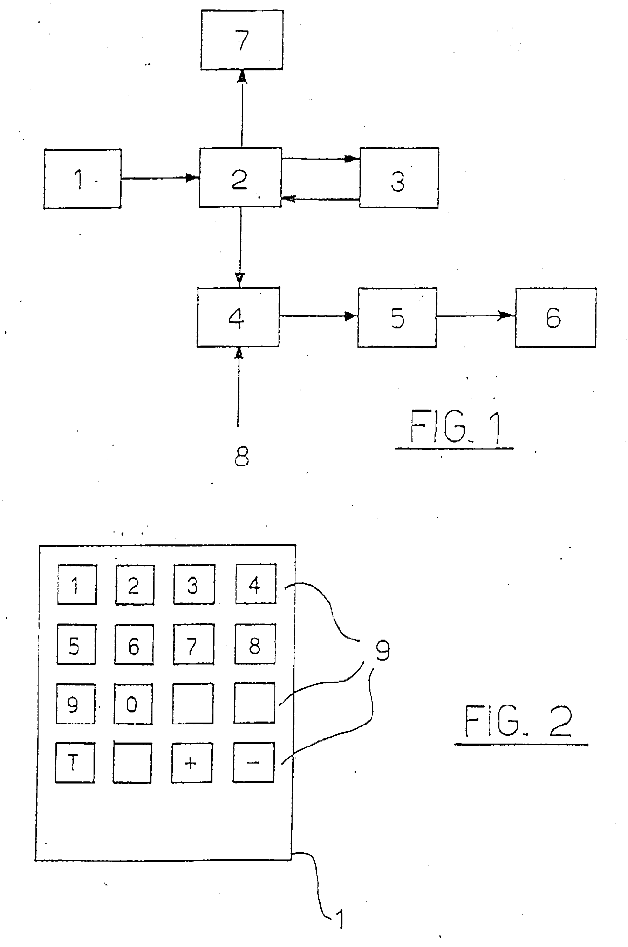

In Figure 1, the reference number 1 indicates the command unit, number 2 the control unit, number 3 a small read and write memory (of the type commonly called RAM (Random Access Memory)) to memorize at least two, but preferably four page numbers; the mentioned memory can also be included in the control unit 2.

Number 4 indicates the Teletext decoder, number 5 the page memory (eventually, of four or eight pages), number 6 indicates the visual system of the contents of the indicated page, and number 7 an additional display device to visualize the page number.

Finally number 8 indicates a clamper which recognizes the teletext signal in video frequency.

The command unit 1 can be of a known type, for example the keyboard of a remote control; it shall contain the usual keys numbered 0 to 9 and the other usual buttons for the command of the receiver, among which two buttons marked with the symbols "+" and "-" or with other equivalent symbols, such as " rewind" and " forward", and a button to enable Teletext reception (that can be marked with the letter "T" or with an equivalent symbol);

In Figure 2, that schematically represents the keyboard of a possible command unit, where the above-mentioned keys are exactly indicated. The control unit 2 according to the invention will be described later. The decoder 4, the page memory 5 and the display device 6 can be of the known type normally used with the wall-known Teletext receivers; the display device 6 is normally represented by the picture-tube of the television set.

The visual system 7 can be a seven segment LED display of the type known.

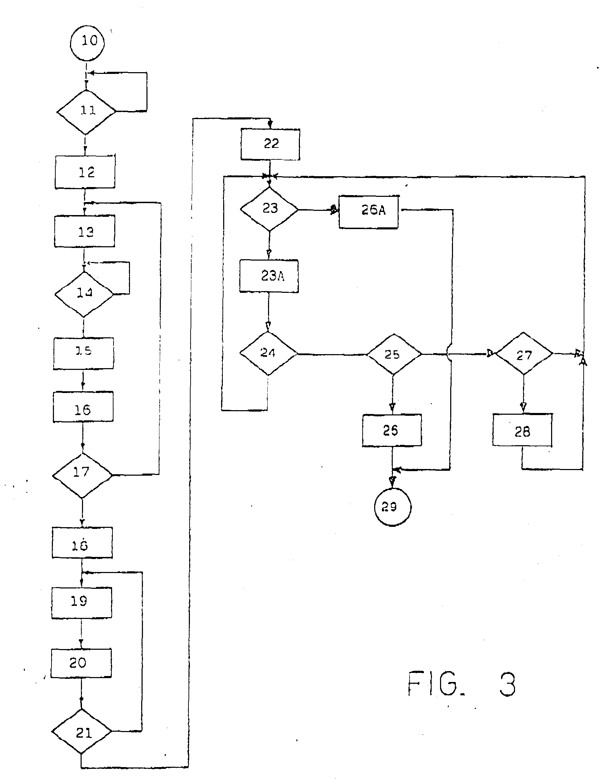

Figure 3 represents, in a simplified form, the logic flow that connects the logic blocks of a first example of the control unit 2; such control unit can be realized indifferently with wired logic blocks or with a microprocessor system (programmed logic); the two systems are perfectly equivalent from a functional point of view. Block 10 is the initial block of operations; block 11 is a block that checks whether the "T" key has been pressed on the command unit 1; in the check blocks, in Figure 3, the exit in the bottom refers to the answer "YES", the aide exit refers to the answer "N0". Thus if the answer is "YES", i.e. if the "T" button has been pressed, block 11 gives the control to the following block 12; on the contrary, the control returns to block 11.

Block 12 executes the following operational
- clears a figures "N"counter;
- zeros the display of page number 7;
- arranges for the memory 3 to be written;
- passes the control to the following block 13.

Block 13 adds a unit to the counter "N" and passes the control to the following block 14.

Block 14 checks whether a numbered button has been pressed on the command unit 1; if so it passes the control to the following block 15, if not control returns to block 14.

Block 15 sends to the display device 7 the number of the pressed key that is then visualized; the following block 16 sends the same number,appropriately encoded, to the addressed cell N of the memory 3, where it is memorized.

Block 17 checks whether the counter N has reached number 3, i.e. it checks whether the three figure number of the indicated page has been completed; we will call such memorized number of three figures N0; in the affirmative case the control goes to the following block 18; otherwise the control returns to block 13.

Block 18 arranges for the memory 3 to be read ("READ"), zeros the counter N and passes the control to block 19.

Block 19 increments the counter N by one unit; block 20 extracts from the memory 3 the number memorized in the address cell N and sends it to the decoder 4.

Block 21 checks whether the counter N has reached number 3; in the affirmative case it passes the control to the following block 22, on the contrary the control returns to block 19.

Block 22 memorizes in the memory 3, the addresses following those previously used for the number N0 and precisely to the addresses 4,5 and 6, the numbered sequence 999; we will call P this second number stored in the memory 3; it zeros a seconds recording timer; starts the operation for the search of the requested page and passes the control to the following block 23.

Block 23 checks whether the timer registers less than 30 seconds; in the affirmative case it passes the control to block 23A; otherwise it passes the control to block 26A.

Block 23A gradually acquires the numbers of the page transmitted and received one after the other; the number of the presently received page (unless it is a service page, whose number cannot be visualized), is transmitted to the following block 24.

Block 24 checks whether the received number is smaller than the number N0 stored in the memory 3; in the affermative case it gives the control back to block 23; on the contrary control passes to block 25.

Block 25 checks whether the received number is the same as the number N0 stored in the memory 3; in the affirmative case the control passes to block 26, on the contrary the control passes to block 27.

Block 26 acquires the page transmitted in that moment and shows it on the display device 6; it then passes the control to block 29.

Block 26A acquires the page located by the second sequence (P) of figures stored in memory 3; it shows such sequence on the display device 7 and the page content on display 6; it then passes the control to block 29.

Block 27 checks whether the second number (P) contained in memory 3 is higher than the received number; in the affirmative case it passes the control to block 28; otherwise it gives the control back to block 23.

Block 28 stores the number received in the memory 3 as a new number P and gives the control back to block 23.

Block 29 is the end operations block; in practice, it can give the control back to the initial block 10 or to any other block apt to a now cycle of operations.

The functioning of the described circuit is the following. The control unit accepts from the command unit a three figured number (N0) and stores it in the memory 3; then it begins to gradually compare the numbers transmitted with the memorized one; if it finds the required number, it acquires and shows the relative page; every time that it finds a number higher than that required, it confronts it with the second number (P) in the memory, where 999 is initially written; every time that it finds a number higher than that required (N0), but lower than the one already stored in the memory (P), the new, lower one is memorized; if after 30 seconds it cannot find the required number, it concludes that it is not transmitted and it acquires and shows the page nearest to the required one, whose number (P) is in the memory.

Of course, rather than just memorize the number which is nearest to the required one, it is also possible to memorize, in a special page memory, the content of the page located by such a nearest number, so that, at the end of the search, that page itself can be immediately viewed.

For simplicity the functioning has been demonstrated in the case of the search of the following page ('next' function); the search of the preceding page works in the same way; it is sufficent to go to 000 with the second memory and to reverse the test of the block 27.

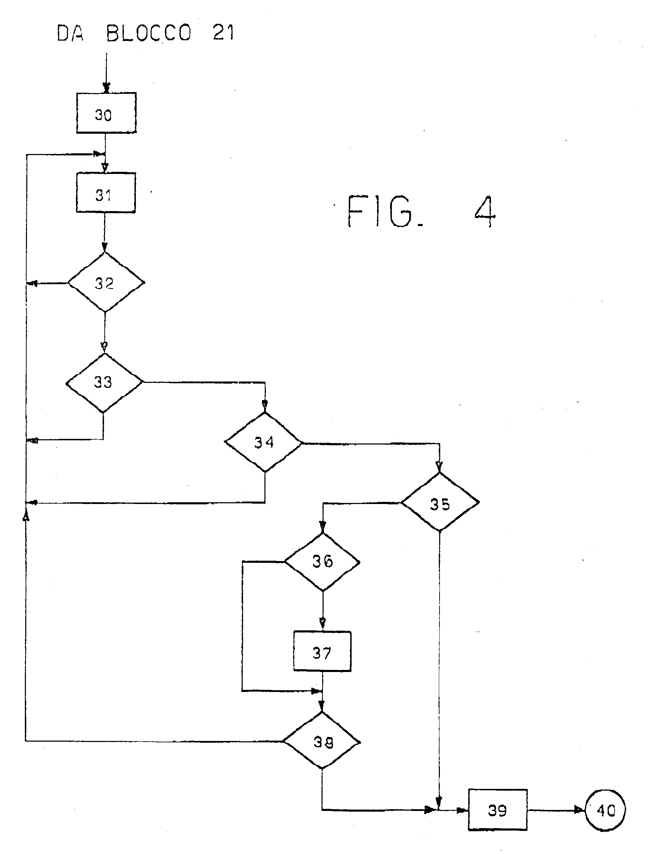

With the described system we need, in the case of a vain search, to wait for at least 30 seconds to obtain the viewing of the nearest page; the system that will now be described, with reference to Figure 4, allows, in propitious cases, to considerably shorten the dely; however, such a system assures the result only if, in any three-fold of numbers transmitted in the cycle, more than a repeated page is ever contained.

Figure 4 represents, in a simplified form, and regards the part of interest concerning the aims of the present invention, the logic flow that connects the logic blocks of a second example of control unit 2.

The blocks from 1 to 21 are the same as those of Figure 3; thus, they are neither represented nor described.

Block 30 receives the control from the block 21 of Figure 3; it zeros the three boxes of the memory following the one occupied by the current page number (N0); for clarity sake we will indicate these three boxes with the symbols N1, N2 and N3; block 30 also zeros a flag F and then passes the control to block 31.

Block 31 acquires the number of the page in transmission.

Furthermore, Block 31 always recopies the content of the memory cell N2 in cell N1; the content of cell N3 in cell N2 and memorizes the number of the current page received (unless it is a service page, whose number cannot be visualized), in memory cell N3; the control passes to the following block 32.

Block 32 checks if the number memorized in the N1 box of the memory is different from zero; in the affirmative case control passes to block 33; otherwise it returns to block 31.

Block 33 checks whether there is a double condition: i.e. if N1 is higher than N2 and N1 is lower than N3; if both are satisfied, it means that number N2 corresponds to a repeated page and control returns to block 31; if at least one of the two is not satisfied, the control passes to block 34.

Block 34 checks whether there is a double condition i.e. if N2 is higher than N3 and N1 is lower than N3; if both are satisfied, it means that number N2 corresponds to a repeated page and control returns to block 31; if at least one of the two is not satisfied, control passes to block 35.

Block 35 checks whether the indicated number NO is the same as N2; in the affirmative case control passes to block 39; otherwise to block 36.

Block 36 checks whether NO is higher than N2; in the affirmative case control passes to block 37; otherwise it passes to block 38.

Block 37 raises a flag F and passes the control to block 38.

Block 38 checks whether there is a double condition: i.e. if NO is lower than N2 and if the flag F is raised; if both are satisfied, it means that the NO number is not transmitted and N2 is the one nearest to it; the control passes to block 39; if at least one of the two is not satisfied, the control returns to block 31.

Block 39 acquires the page located by the sequence of figures stored in the memory box N2; shows such sequence on display device 7 and the page content on display device 6; then passes the control to block 40.

Block 40 is the end of operations block; in practice it can give the control back to the initial block 10 or to another block apt for a new cycle of operations.

The functioning of the described circuit is the following. An analysis of all the consecutive threefold of page numbers received is gradually carried out; for this purpose the numbers (N1,N2) are memorized that locate the two previous pages received before the one that is in transmission (N3), therefore making an analysis of the series of three numbers (N1, N2, N3) being located if the page (N2) preceding the one in transmission is a repeated page. If the page looked for (N0) is not found, but, after the number of a preceding, not repeated page (N2), lower than the indicated number (N0), the number of a preceding, not repeated page, (N2) higher than the indicated one (N0) is received, the search of the indicated page (N0) is interrupted and the page (N2) preceding the one in transmission is acquired instead of it, as the page nearest to the indicated one (N0).

It is decided that the page (N2) preceding the one in transmission is a repeated page when the relationship (N1 less than N3), and one of the two relationships: (N1 higher than N2) or (N2 higher than N3) are simultaneously fulfilled.

Of course also in this case the fact that the content of the N2 page is already stored in a special page memory when the control circuit decides to acquire such N2 page, is advantageous because in that case no further time is wasted; this is practicable; it is only necessary that the circuit stores, during the search, the content of the current page and keeps it for at least one turn; therefore two page memories to be used alternatively are needed; one contains the current page (N3), and the other the preceding page (N2).

Also in this case, for simplicity, the functioning has been demonstrated in the case of search of the succeeding page ('next' function); the case of search of the preceding page is analogous; it is sufficent to appropriately modify the tests.

The system described with reference to Figure 4 does not operate if the user, by mistake, indicates a page number that is out of range; for example the pages located by the numbers between 100 and 799 are usually transmitted; if the user indicates page 813 as the page to be looked for, it is not found and the system of Figure 4 is not able to realise that it does not exist as it cannot find numbers higher than that indicated.

To obviate this drawback it is possible to make the control circuit locate and memorize, for instance when switching on the receiver, the highest page number actually transmitted; the process used can be analogous and very similar to that used in Figure 3 to find the nearest number to the indicated one.

After that, if the indicated page to look for is of a number higher than said highest number, the control circuit does not make the search, and in such a case, it advises the user, for example by showing on the display device 7 the maximum number posible.

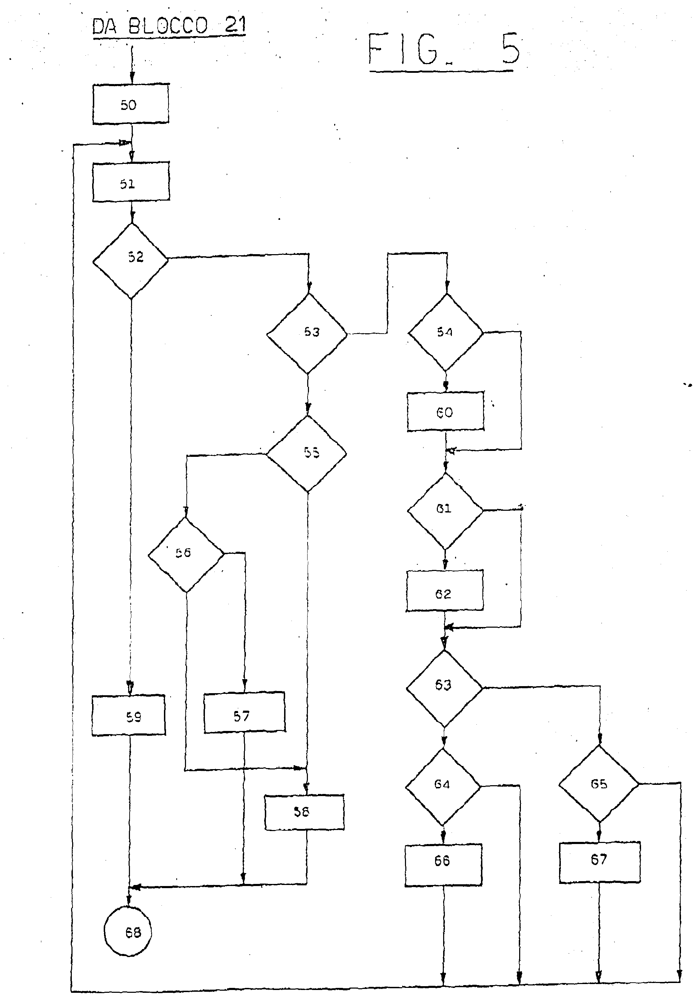

Figure 5 represents the logic flow of the functioning according to the invention of the control unit of the receiver in Figure 1.

The blocks from 1 to 21 are the same as those of Figure 3; thus they are neither represented nor described.

Block 50 receives the control from Block 21 of Figure 3; it initiates the 4 boxes of the memory following that occupied by the current page number (N0); for simplicity sake we will indicate these 4 boxes with the symbols N1, N2, N3 and N4; block 50 writes 999 in box N1, and in box N3, and 000 in boxes N2 and N4; then passes control to block 51.

Block 51 acquires the number of the page in transmission (that we will call NT from here in advance) and passes the control to block 52.

Block 52 checks whether the indicated number N0 is the same as the number NT of the page in transmission; in the affirmative case control passes to block 59; otherwise it returns to block 53.

Block 53 checks whether the number NT is the same as the memorized number N2; in the affirmative case it passes the control to block 55; otherwise to block 54.

Block 54 checks whether the number NT is higher than the memorized number N2; in the affirmative case it passes the control to block 60; otherwise to block 61.

Block 55 checks whether the number N0 is higher than the memorized number N2; in the affirmative case it passes the control to block 58; otherwise to block 56.

Block 56 checks whether the number N0 is lower than the memorized numberN1; in the affirmative case it passes the control to block 58; otherwise to block 57.

Block 57 sets N0=N3 if the search is for the following page ("next") or N0=N4 if the search is for the preceding page; the control passes to block 68.

Block 58 sets N0=N2 if the search is for the following page ("next") or N0=N1 if the search is for the preceding page; the control passes to block 68.

Block 59 acquires the page located by the sequence of figures stored in the memory box N0; it shows such sequence on the display device 7 and the content of the page on display device 6, and passes the control to block 68.

Block 60 sets N2=NT, i.e. memorizes the number of the page in transmission in the memory N2; then it passes the control to block 61.

Block 61 checks whether the number NT is lower than the memorized number N1; in the affirmative case it passes the control to block 62; otherwise to block 63.

Block 62 sets N1=NT, or stores the number of the page in transmission in the memory N1; then it passes the control to block 63.

Block 63 checks whether the number NT is lower than the indicated number N0; in the affirmative case it passes the control to block 64; otherwise to block 65.

Block 64 checks whether the number NT is higher than the memorized number N4; in the affirmative case it passes the control to block 66; otherwise the control returns to block 51.

Block 65 checks whether the number NT is lower than the memorized number N3; in the affirmative case it passes the control to block 67; otherwise the control returns to block 51.

Block 66 sets N4=NT, i.e. it stores the number of the page in transmission in the memory N4; then it passes the control back to block 51.

Block 67 sets N3=NT, i.e. it stores the number of the page in transmission in the memory N3; then passes the control back to block 51.

Block 68 is the end of operations block; in practice it can give the control back to the initial block 10 or to any other block apt for a new cycle of operations.

The functioning of the described circuit is the following. An analysis of all the page numbers received in at least one complete cycle is carried out; the lowest number received is found at the end of memory N1; in the memory N2 the highest number received; the lowest number received of all the numbers higher than the one originally indicated (N0) is found in memory N3; in memory N4 the number received that is the highest of all those lower than the number indicated in the beginning (N0) is found; at this point N3 is selected and shown, if the search was for the following number (or N4 if the search was for the preceding number); in case that the indicated number is out of range, N2 (or respectively N1) is selected and shown.

The described system operates independently from the order in which the pages are transmitted in the cycle and by the fact that there are repeated pages or not.

As it appears from the above description, the improved receiver for Teletext transmissions, according to the present invention, avoids the drawback of the endless search of a page which is not included in the ones transmitted.

For the sake of simplicity, we have described the case of search and selection due to the introduction of the three figure sequence locating the required page; and it has been supposed that such a sequence is that immediately higher than the page being viewed in that moment; of course, the same search mechanism is valid and applicable also in cases in which the sequence of figures is automatically produced by the control unit itself, following a known proceeding, after the activating the 'next' button for the search of the page (or of a certain number, e.g. 4, pages) following the one being viewed; such following page (or pages) are usually stored in special memories to be shown on command; it is also natural to apply to such pre-storing search (or searches) the technique according to the described invention, so that the pages can be actually found and stored and the apparatus does not waste time in a useless search of a page that is not in the cycle.

In the same way the described technique can be used, with simple and intuitive modifications, when the required page is that immediately before the visualized one.

It is obvious that, maintaining the principle of the invention, many variants to the characteristics of construction of the improved receiver for Teletext transmissions described as an example are possible, without for this reason exceeding the limits of the present invention.

For example, as normally the decoder 4 already includes a microprocessor, a variant to the described receiver can be realized integrating the control unit 2 with the decoder 4 in a single functional unit, whose operating is controlled by a single microprocessor, with an evident saving of means and therefore of cost.

## Claims

1. Method for receiving teletext transmissions, represented by a plurality of pages, each of which can be selected by the user, from those available, by sending the receiver a command signal that generates a sequence of figures that locates an indicated page and lets control means start a search of the indicated page,
- during the search of the indicated page (N0), said control means (2) memorize the higher (N2) and the lowest(N1) number of the pages that are actually transmitted in the cycle, and also the highest number (N4) that is, however, lower than the number (N0) of the indicated page, and the lowest number (N3) that is, however, higher than the number (N0) of the indicated page,
- interrupt the search of the indicated page (N0)
- and acquire the following (N3) or the preceding (N4) page that is the one nearest to the indicated one (N0), in the case that the indicated number (N0) is included between the highest (N2) and the lowest (N1) actually transmitted in the cycle, or the actually transmitted page having the highest (N2) or the lowest (N1) number, in the case that the indicated number (N0) is not included between the highest (N2) and the lowest (N1) number actually transmitted in the cycle.

2. Method for receiving teletext transmissions, according to claim 1, characterized by the fact that said control means (2) interrupt the search of the sequence of figures generated by said command signal and begins the search of the nearest page also in case that said sequence of figures is not directly generated by the user but is automatically generated by a so called "next" command or a similar command.

3. Method for receiving teletext transmissions, according to any one of the preceding claims, characterized by the fact that, during the search of the indicated page (N0), said control means (2), every time that a page is received, store its content, if it appears to be nearer to the one indicated (N0) than the last stored page.

## Patentansprüche

1. Verfahren zum Empfangen von Teletext-Sendungen, dargestellt durch eine Mehrzahl von Seiten, von denen jede durch den Benutzer aus den verfügbaren auswählbar ist durch Senden eines Befehlssignals zu dem Empfänger, der eine Reihe von Zeichen erzeugt, die eine angegebene Seite lokalisieren und eine Steuerungseinrichtung eine Suche der angegebenen Seite beginnen lässt,
- während der Suche der angegebenen Seite (N0) speichert die Steuereinrichtung (2) die höhere (N2) und die niedrigste (N1) Nummer der Seiten, die tatsächlich in dem Zyklus gesendet werden, und ebenfalls die höchste Nummer (N4), d.h. jedoch niedriger als die Nummer (N0) der angegebenen Seite und die niedrigste Nummer (N3), d.h. jedoch höher als die Nummer (N0) der angegebenen Seite,
- unterbricht die Suche der angegebenen Seite (N0)
- und erfasst die folgende (N3) oder die vorausgehende (N4) Seite, die die zu der angegebenen (N0) nächstliegende ist, in dem Fall, dass die angegebene Nummer (N0) zwischen der höchsten (N2) und der niedrigsten (N1) der tatsächlich in dem Zyklus gesendeten enthalten ist, oder die tatsächlich gesendete Seite mit der höchsten (N2) oder der niedrigsten (N1) Nummer, in dem Fall, dass die angegebene Nummer (N0) nicht zwischen der tatsächlich in dem Zyklus gesendeten höchsten (N2) und der niedrigsten (N1) Nummer enthalten ist.

2. Verfahren zum Empfangen von Teletextsendungen nach Anspruch 1, dadurch gekennzeichnet, dass die Steuerungseinrichtung (2) die Suche der Folge der durch das Befehlssignal erzeugten Zeichen unterbricht und die Suche der nächsten Seite ebenfalls in dem Fall beginnt, dass die Folge von Zeichen nicht direkt durch den Benutzer erzeugt wird, sondern automatisch durch einen sogenannten "nächste"-Befehl oder einen vergleichbaren Befehl erzeugt wird.

3. Verfahren zum Empfangen von Teletext-Sendungen nach einem der vorstehenden Ansprüche,
dadurch gekennzeichnet, dass während der Suche der angegebenen Seite (N0) die Steuerungseinrichtung (2) jedes Mal, wenn eine Seite empfangen wird, ihren Inhalt speichert, wenn sie näher an der einen angegebenen (N0) erscheint, als die letzte gespeicherte Seite.

## Revendications

1. Procédé pour recevoir des transmissions de télétexte, représentées par une pluralité de pages, dont chacune peut être sélectionnée par l'utilisateur, parmi celles disponibles, en envoyant au récepteur un signal de commande qui génère une séquence de chiffres qui localise une page indiquée et amène des moyens de commande à commencer la recherche de la page indiquée,
- pendant la recherche de la page indiquée (N0), lesdits moyens de commande (2) mémorisent le numéro supérieur (N2) et le numéro le plus bas (N1) des pages qui sont effectivement transmises au cours du cycle, et également le numéro le plus haut (N4) qui est toutefois inférieur au numéro (N0) de la page indiquée, et le numéro le plus bas (N3) qui est toutefois supérieur au numéro (N0) de la page indiquée,
- interrompent la recherche de la page indiquée (N0)
- et acquièrent la page suivante (N3) ou précédente (N4) qui est la plus proche de celle indiquée (N0), dans le cas où le numéro indiqué (N0) serait compris entre le numéro le plus haut (N2) et le numéro le plus bas (N1) effectivement transmis au cours du cycle, ou la page effectivement transmise aurait le numéro le plus haut (N2) ou le numéro le plus bas (N1), dans le cas où le numéro indiqué (N0) ne serait pas compris entre le numéro le plus haut (N2) et le numéro le plus bas (N1) effectivement transmis au cours du cycle.

2. Procédé pour recevoir des transmissions de télétexte, selon la revendication 1, caractérisé en ce que lesdits moyens de commande (2) interrompent la recherche de la séquence de chiffres générée par ledit signal de commande et commencent la recherche de la page la plus proche également dans le cas où ladite séquence de chiffres ne serait pas directement générée par l'utilisateur mais serait générée automatiquement par une commande appelée "suite" ou une commande similaire.

3. Procédé pour recevoir des transmissions de télétexte, selon l'une quelconque des revendications précédentes, caractérisé en ce que, pendant la recherche de la page indiquée (N0), lesdits moyens de commande (2), chaque fois qu'une page est reçue, stockent son contenu, s'il paraît plus proche de la page indiquée (N0) que la dernière page stockée.
